# DEMANDE DE BREVET EUROPEEN

(11) **EP 1 704 949 A1**
(43) Date de publication de la demande: **27.09.2006**
(21) Numéro de dépôt: 05102234.1
(22) Date de dépôt: 21.03.2005
(51) Int. Cl.: B23B 7/06, B23B 9/02, B23Q 3/00

(54) **Machine-outil pour la réalisation de pièces de haute précision**

(71) Demandeur: Tornos SA, 2740 Moutier (CH)
(72) Inventeur: Marchand, Olivier, 2740 Moutier (CH)
(74) Mandataire: BOVARD AG

(57) **Abrégé**

Machine-outil (1) pour la réalisation de pièces (2) de haute précision, cette machine-outil (1) comprenant une structure constituée par un bâti (4) et portés par ce bâti (4) :
-au moins un premier ensemble fonctionnel qui est,
.équipé d'une partie active (61) qui, montée tournante autour d'un premier axe de rotation (62), assure une fonction de maintien et d'entraînement en rotation de la pièce (2) de manière à permettre l'usinage de cette pièce (2),
.guidé en translation dans une première direction (D1) parallèle audit premier axe de rotation (62),

-au moins un premier système d'usinage (8) constitué d'un premier bloc porte-outil (81),
.supportant une pluralité de premiers outils d'usinage (82) fixés et disposés en au moins une rangée, et
.guidé dans au moins deux directions sécantes définissant un premier plan (P1) sensiblement orthogonal audit premier axe de rotation (62), dont une deuxième direction (D2) et une troisième direction (D3) qui sont déterminées pour autoriser l'usinage de la pièce (2), et

la dite machine-outil étant caractérisée en ce qu'elle comprend un deuxième système d'usinage (10) constitué par au moins un bloc porte-outil qui, dit deuxième bloc porte-outil (101), est disposé d'un manière rayonnante au premier axe de rotation (62), et est :
-d'une part, guidé selon une quatrième direction (D4) sécante au dit premier axe de rotation (62) et,
-d'autre part, placé sous l'influence d'au moins une troisième unité de commande (11) vers des positions prédéterminées dans la quatrième direction (D4).

## Description

L'invention se rapporte à une machine-outil pour la réalisation de pièces de haute précision, notamment, mais non exclusivement, par décolletage de telles pièces dans des barres de matériau.

Par pièces de haute précision on désigne ci-après toute pièce dont au moins une tolérance dimensionnelle de fabrication (écart entre dimension maximale tolérée et dimension minimale tolérée) est inférieure au centième de millimètre.

Par barre de matériau, dans la présente demande, on désigne tout élément d'une certaine longueur, quelle que soit cette longueur, comportant,
- une surface périphérique, dite première surface périphérique qui définit la section transversale de cette barre,
- un axe longitudinal, dit deuxième axe longitudinal,
- deux extrémités opposées, dites première et deuxième.

Une machine-outil de décolletage comprend généralement une structure constituée par un bâti qui s'appuie sur un support, tel le sol, et portés par ce bâti :
- au moins un premier ensemble fonctionnel qui, dit broche, est,
   - équipé d'une partie active qui, montée tournante autour d'un axe de rotation, dit premier axe de rotation, assure, au moins à elle seule ou par le biais d'un canon de guidage, une fonction de maintien et d'entraînement en rotation de la barre autour de son axe longitudinal, dit deuxième axe longitudinal, de manière à permettre l'usinage de cette barre, notamment, au niveau d'une première extrémité, et ce, au moyen de différents outils d'usinage,
   - guidé en translation dans une première direction parallèle audit premier axe de rotation,
   - placé sous l'influence d'au moins une première unité de commande vers des positions prédéterminées dans la première direction,
- au moins un premier système d'usinage constitué d'un premier bloc porte-outil,
   - supportant une pluralité de premier outils d'usinage fixés et disposés en au moins une rangée, c'est-à-dire avec leur axes longitudinaux parallèles entre eux et avec un écartement prédéterminé, et
   - guidé dans au moins deux directions sécantes définissant un premier plan sensiblement orthogonal audit premier axe de rotation, dont une deuxième direction et une troisième direction qui sont déterminées pour autoriser l'usinage de la barre, et
   - placé sous l'influence d'au moins une deuxième unité de commande vers des positions prédéterminées dans les dites deuxième et troisième directions.

L'avantage de ce type de machine-outil est notamment sa productivité.

Cependant, bien que:
- la partie active de la broche soit portée par un moyen de guidage en rotation d'un type permettant un guidage en rotation de la broche autour du premier axe de rotation qui est extrêmement précis ou que la machine comprenne un canon qui permette d'assurer un guidage précis de la barre ou de la pièce à usiner selon ledit premier axe de rotation, et ce, sur une très large gamme de vitesses de rotation, et
- la broche soit portée par un premier dispositif de guidage en translation selon la première direction d'un type permettant un guidage en translation de cette broche qui est également extrêmement précis,
on reproche à ce type de machine de ne pas autoriser des usinages d'une très grande précision.

Un résultat que l'invention vise à obtenir est une machine-outil qui permet d'associer précision d'usinage et productivité.

A cet effet, l'invention a pour objet une machine-outil selon la revendication 1.

L'invention sera mieux comprise à la lecture de la description ci-après faite à titre d'exemple non limitatif en regard du dessin ci-annexé qui représente schématiquement :

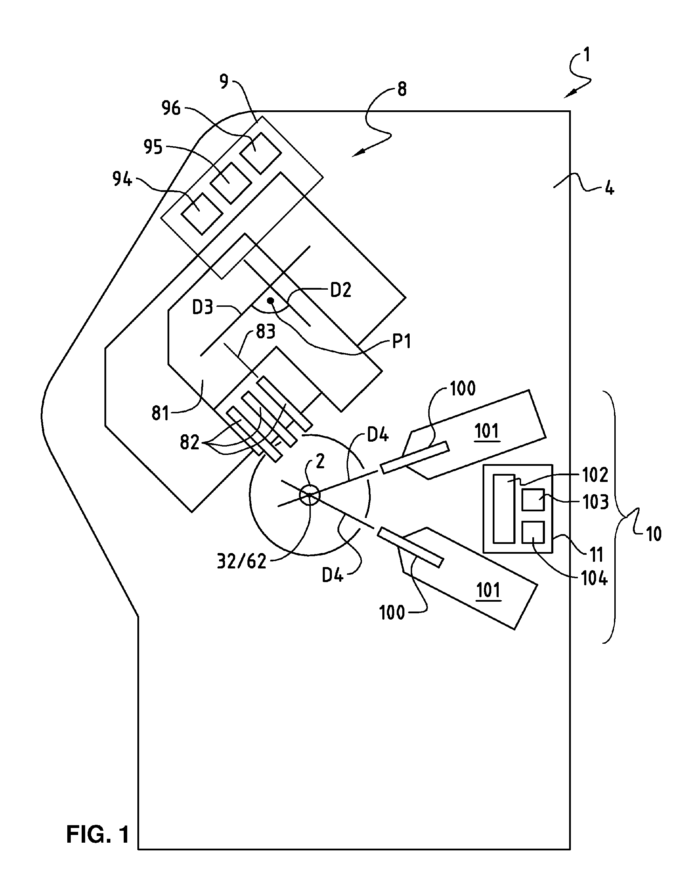

- figure 1 : une machine-outil selon l'invention, vue en coupe selon un plan transversal sensiblement vertical,

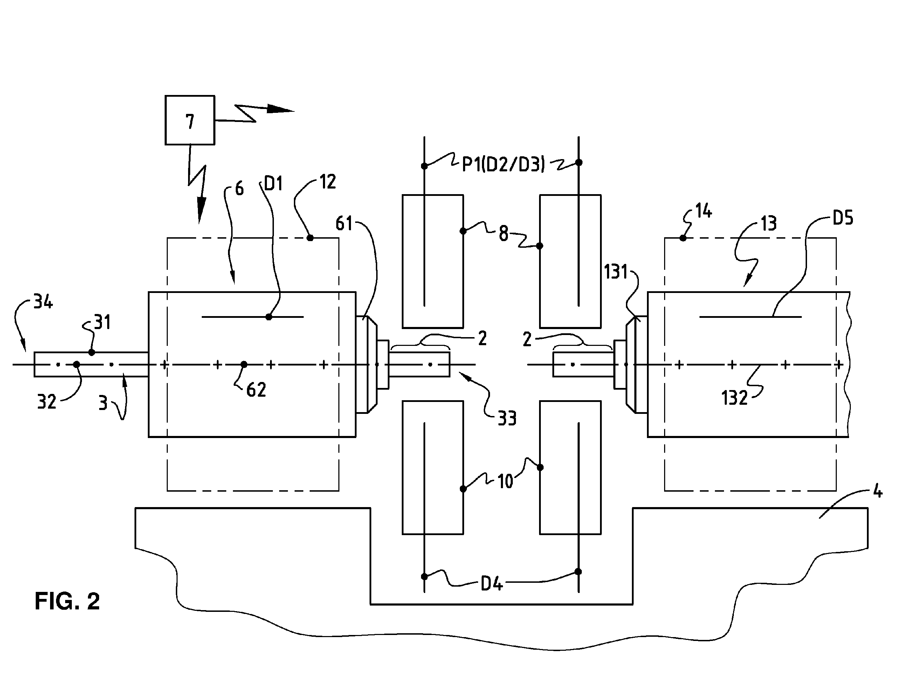

- figure 2 : une vue latérale schématique et simplifiée d'ensembles fonctionnels de la machine,

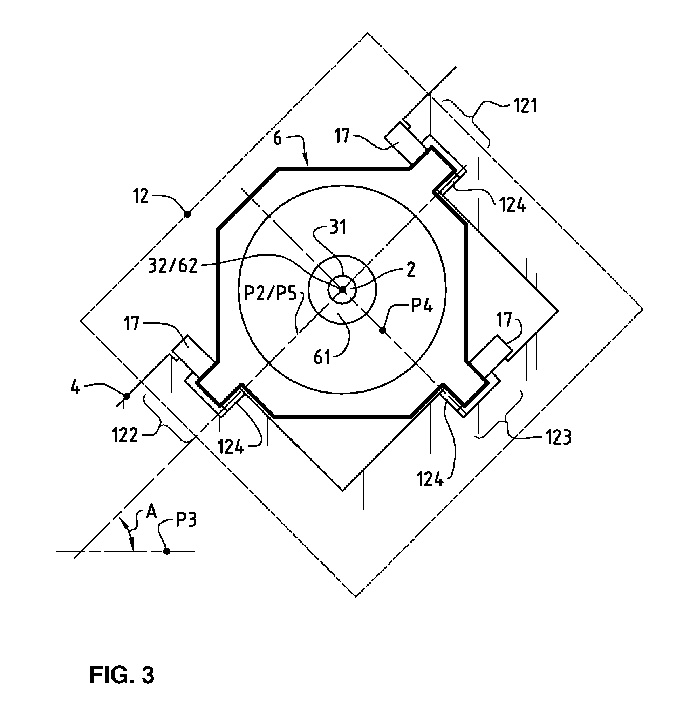

- figure 3 : à plus grande échelle, une vue locale de face du premier ensemble fonctionnel dit broche,

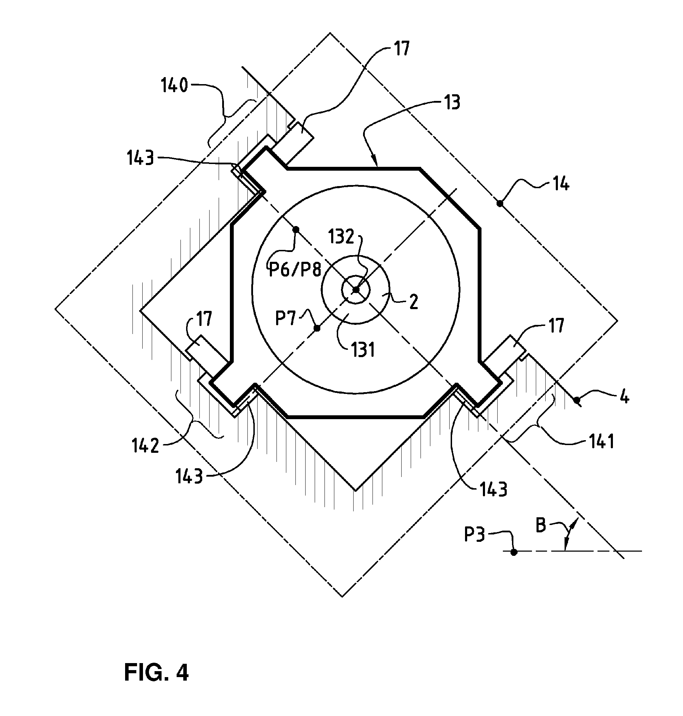

- figure 4 : à plus grande échelle, une vue locale de face du deuxième ensemble fonctionnel dit contre broche,

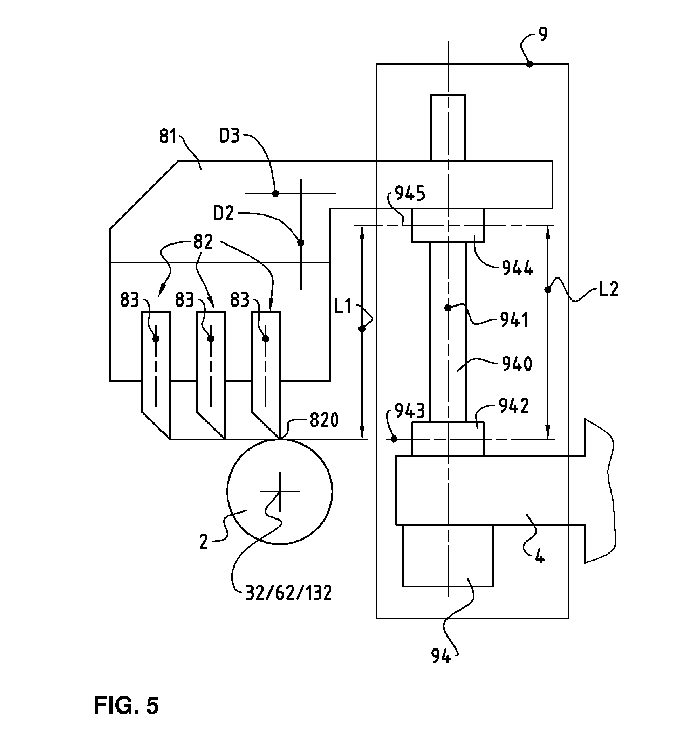

- figure 5 : une vue de face d'un des systèmes d'usinage prévus sur la machine de l'invention, dit premier système d'usinage.

En se reportant au dessin, on voit une machine-outil 1 pour la réalisation de pièces 2 de haute précision.

La machine-outil 1 comprend une structure constituée par un bâti 4 qui s'appuie sur un support, tel le sol, et portés par ce bâti 4 :
- au moins un premier ensemble fonctionnel qui, dit broche 6, est,
   - équipé d'une partie active 61 qui, montée tournante autour d'un axe de guidage en rotation, dit premier axe de rotation 62, assure une fonction de maintien et d'entraînement en rotation de la pièce 2 de manière à permettre l'usinage de cette pièce 2,
   - guidé en translation dans une première direction D1 parallèle audit premier axe de rotation 62,
   - placé sous l'influence d'au moins une première unité de commande 7 vers des positions prédéterminées dans la première direction D1,
- au moins un premier système d'usinage 8 constitué d'un premier bloc porte-outil 81,
   - supportant une pluralité de premiers outils d'usinage 82 fixés et disposés en au moins une rangée, c'est-à-dire, avec leur axes longitudinaux 83 parallèles entre eux et avec un écartement prédéterminé, et
   - guidé dans au moins deux directions sécantes définissant un premier plan P1 sensiblement orthogonal audit premier axe de rotation 62, dont une deuxième direction D2 et une troisième direction D3 qui sont déterminées pour autoriser l'usinage de la pièce 2, et
   - placé sous l'influence d'au moins une deuxième unité de commande 9 vers des positions prédéterminées dans les dites deuxième et troisième directions D2, D3.

Bien que cela n'apparaisse pas sur les dessins, la deuxième unité de commande 9 fait intervenir une commande de type numérique.

D'une manière notable, la machine-outil 1 comprend un deuxième système d'usinage 10 constitué par au moins un bloc porte-outil qui, dit deuxième bloc porte-outil 101, est disposé d'un manière rayonnante au premier axe de rotation 62, et est
- d'une part, guidé selon une quatrième direction D4 sécante au dit premier axe de rotation 62 et,
- d'autre part, placé sous l'influence d'au moins une troisième unité de commande 11 vers des positions prédéterminées dans la quatrième direction D4.

De préférence, la machine-outil 1 est prévue pour la réalisation de pièces 2 de haute précision, notamment, par décolletage de telles pièces 2 dans des barres 3 de matériau.

Une barre 3 de matériau consiste en un élément d'une certaine longueur, quelle que soit cette longueur, comportant,
- une surface périphérique 31, dite première surface périphérique 31 qui définit la section transversale de cette barre 3,
- un deuxième axe longitudinal 32,
- deux extrémités opposées 33, 34, dites première extrémité 33 et deuxième extrémité 34.

Ainsi, mais de manière non limitative, la machine comprend au moins un premier ensemble fonctionnel qui, dit broche 6, est,
- équipé d'une partie active 61 qui, montée tournante autour d'un axe de guidage en rotation, dit premier axe de rotation 62, assure une fonction de maintien et d'entraînement en rotation de la barre 3 autour de son axe longitudinal, dit deuxième axe longitudinal 32, de manière à permettre l'usinage de cette barre 3, notamment, au niveau d'une première extrémité 33,
- guidé en translation dans une première direction D1 parallèle audit premier axe de rotation 62,
- placé sous l'influence d'au moins une première unité de commande 7 vers des positions prédéterminées dans la première direction D1.

De manière remarquable, le deuxième système d'usinage 10 est constitué par une pluralité de deuxièmes blocs porte-outil 101 qui sont disposés de manière rayonnante au premier axe de rotation 62, et chacun de ces deuxièmes blocs porte-outil 101 est :
- guidé selon une quatrième direction D4 sécante au dit premier axe de rotation 62,
- porteur d'un outil d'usinage 100, dit deuxième outil d'usinage 100 orienté pour être actif selon la quatrième direction D4,
- placé sous l'influence d'au moins une troisième unité de commande 11 vers des positions prédéterminées dans la quatrième direction D4.

Selon une forme de réalisation notable, le guidage selon la quatrième direction D4 résulte d'un guidage en translation.

Suivant une autre forme de réalisation notable, le guidage selon la quatrième direction D4 résulte d'un guidage en oscillation d'un deuxième bloc porte-outil 101 autour d'un point de rotation prévu de manière à induire le déplacement dudit deuxième bloc porte-outil 101 dans la quatrième direction D4 recherchée.

De manière également remarquable :
- la deuxième unité de commande 9 comprend un premier organe moteur 94 de déplacement du premier bloc porte-outil 81 dans la deuxième direction D2 et un deuxième organe moteur 95 de déplacement dudit premier bloc porte-outil 81 dans la troisième direction D3, lesquels premier organe moteur 94 et deuxième organe moteur 95 sont placés sous le contrôle d'un premier moyen fonctionnel de commande numérique 96,
- la troisième unité de commande 11 met en oeuvre une came 102 d'actionnement de chaque deuxième bloc porte-outil 101 et comprend un troisième organe moteur 103 est placé sous le contrôle d'un deuxième moyen fonctionnel de commande numérique 104.

La machine-outil 1 selon l'invention permet donc d'associer avantageusement les qualités inhérentes à deux systèmes d'usinage radicalement différents en compensant les défauts de chaque système.

En effet avec le premier système d'usinage 8, il est possible, d'une part, de disposer d'un grand nombre d'outils différents et d'utiliser ces outils avec un nombre réduit de directions de déplacement (deuxième direction D2 et une troisième direction D3) et, d'autre part, d'envisager des usinages complexes par interpolation, dans la mesure où la deuxième unité de commande 9 fait intervenir la commande de type numérique.

En revanche le fait d'utiliser un bloc porte-outil (premier bloc porte-outil 81) qui peut être déplacé selon au moins deux directions sécantes (deuxième direction D2 et une troisième direction D3) introduit un facteur d'imprécision.

Avec le deuxième système d'usinage, d'une part, le fait que chaque bloc porte-outil (deuxième bloc porte-outil 101) soit mobile selon une seule direction (quatrième direction D4) permet, sous réserve de la qualité du guidage en translation, de garantir une grande précision et, d'autre part, le fait que plusieurs blocs d'outil soient disposés radialement au premier axe de rotation 62 permet d'utiliser plusieurs deuxième blocs porte-outil 101 à la fois.

Bien que cela n'apparaisse pas sur les dessins, la partie active 61 de la broche 6 peut être portée par un deuxième moyen fonctionnel de guidage en rotation d'un type permettant un guidage en rotation de la broche 6 autour du premier axe de rotation 62 qui est extrêmement précis, et ce, sur une très large gamme de vitesses de rotation.

La machine outil selon l'invention peut également mettre en oeuvre un canon de guidage de la barre 3 dans laquelle la pièce 2 est usinée (solution non représentée).

La broche 6 est portée par un premier dispositif de guidage en translation selon la première direction D1 d'un type permettant un guidage en translation de cette broche 6 qui est également extrêmement précis.

De manière remarquable, le premier ensemble fonctionnel, dit broche 6, est, guidé en translation dans une première direction D1 parallèle audit premier axe de rotation 62, par un premier dispositif de guidage en translation 12 qui comprend :
- un premier élément de guidage en translation 121 et un deuxième élément de guidage en translation 122 qui sont situés de part et d'autre de la broche 6 et disposés de manière à définir un plan de guidage, dit deuxième plan P2 de guidage, qui passe par le premier axe de rotation 62, ce deuxième plan P2 de guidage étant incliné d'une première valeur angulaire A prédéterminée par rapport à un troisième plan P3 horizontal,
- un troisième élément de guidage en translation 123 qui est disposé dans un plan de guidage, dit quatrième plan P4 de guidage, qui passe par le premier axe de rotation 62 et est sécant audit deuxième plan P2 de guidage.

La première valeur angulaire A de l'inclinaison est par exemple comprise entre zéro et quatre vingt dix degrés.

Ces particularités techniques permettent de garantir la précision de déplacement en translation de la broche 6.

Le premier élément de guidage en translation 121, le deuxième élément de guidage en translation 122 et le troisième élément de guidage en translation 123 sont chacun constitués par une glissière de guidage en translation qui peut comprendre des rouleaux à aiguilles 124.

Les rouleaux à aiguilles 124 du premier élément de guidage en translation 121 et du deuxième élément de guidage en translation 122 ont chacun un axe longitudinal, dit troisième axe longitudinal, et ces rouleaux à aiguilles 124 sont disposés d'une manière telle que leurs axes longitudinaux, dits troisièmes axes longitudinaux, sont situés dans un cinquième plan P5 qui, au plus est confondu avec le deuxième plan P2 et, au moins est parallèle avec ce deuxième plan P2 et situé au voisinage de ce dernier.

Sur le dessin les repères P4 et P5 ont donc été associés à un même plan représenté par une droite, c'est-à-dire un plan observé en vue de face.

De manière préférentielle, le deuxième plan P2 et le quatrième plan P4 sont perpendiculaires.

De manière remarquable, le premier élément de guidage en translation 121, le deuxième élément de guidage en translation 122 et le troisième élément de guidage en translation 123 peuvent chacun être élastiquement préchargés par un appareil de précharge 17, de manière telle que leur jeu de fonctionnement soit réduit.

L'appareil de précharge comprend par exemple, un ressort d'appui dont la force élastique d'action est réglable (cette disposition technique est bien connue de l'homme du métier).

Tel que cela apparaît au dessin, la machine-outil 1 comprend un deuxième ensemble fonctionnel 13 qui, dit contre broche 13, est,
- équipé d'une partie active 131 qui, montée tournante autour d'un deuxième axe de guidage en rotation, dit deuxième axe de rotation 132, peut assurer une fonction de maintien et d'entraînement en rotation de la pièce 2 de manière à permettre l'usinage de cette pièce 2,
- guidé en translation dans une cinquième direction D5 parallèle audit deuxième axe de rotation 132,
- placé sous l'influence au moins de la première unité de commande 7 vers des positions prédéterminées dans la cinquième direction D5, notamment, de manière à autoriser une opération de reprise d'une pièce 2 située dans la broche 6.

Le deuxième ensemble fonctionnel 13, dit contre broche 13, est guidé en translation dans la cinquième direction D5 parallèle audit deuxième axe de rotation 132, par un deuxième dispositif de guidage en translation 14 qui comprend :
- un quatrième élément de guidage en translation 140 et un cinquième élément de guidage en translation 141 qui sont situés de part et d'autre de la contre broche 13 et disposés de manière à définir un plan de guidage, dit sixième plan P6 de guidage, qui passe par le deuxième axe de rotation 132, ce sixième plan P6 de guidage étant incliné d'une deuxième valeur angulaire B prédéterminée par rapport au troisième plan P3 horizontal,
- un sixième élément de guidage en translation 142 qui est disposé dans un plan de guidage, dit septième plan P7 de guidage, qui passe par le deuxième axe de rotation 132 et est sécant audit sixième plan P6 de guidage.

La deuxième valeur angulaire B de l'inclinaison est par exemple comprise entre zéro et quatre vingt dix degrés.

De manière notable, le quatrième élément de guidage en translation 140, le cinquième élément de guidage en translation 141 et le septième élément de guidage en translation 142 sont chacun constitués par une glissière de guidage en translation qui peut comprendre des rouleaux à aiguilles 143.

Les rouleaux à aiguilles 143 du quatrième élément de guidage en translation 140 et du cinquième élément de guidage en translation 141 ont chacun un axe longitudinal, dits quatrième axe longitudinal, et ces rouleaux à aiguilles 143 sont disposés d'une manière telle que leurs axes longitudinaux, dits quatrièmes axes longitudinaux, sont situés dans un huitième plan P8 qui, au plus est confondu avec le sixième plan P6 et, au moins est parallèle avec ce sixième plan P6 et situé au voisinage de ce dernier.

Sur le dessin les repères P6 et P8 ont donc été associés à un même plan représenté par une droite, c'est-à-dire un plan observé en vue de face.

De manière préférentielle, le sixième plan P6 et le septième plan P7 sont perpendiculaires.

De préférence, le quatrième élément de guidage en translation 140, le cinquième élément de guidage en translation 141 et le sixième élément de guidage en translation 142 peuvent chacun être élastiquement préchargés par un appareil de précharge 17 de manière telle que leur jeu de fonctionnement soit réduit.

Bien que cela n'apparaisse pas de manière flagrante sur le dessin, la broche 6 et la contre broche 13 sont placées en vis-à-vis et le deuxième plan P2 et le sixième plan P6 sont coplanaires, de même que le quatrième plan P4 et le septième plan P7 sont également coplanaires.

De manière remarquable, la machine-outil 1 équipée d'une broche 6 porte pièce et d'une contre broche 13, comprend deux groupes de systèmes d'usinage chacun constitué par un premier système d'usinage 8 et un deuxième système d'usinage 10 et, l'un des groupes est disposé pour réaliser des usinages sur une pièce 2 portée par la broche 6 porte pièce tandis que l'autre est disposé pour réaliser des usinages sur une pièce 2 portée par la contre broche 13.

La machine-outil selon l'invention est encore remarquable en ce que, tant son bâti 4 que chaque premier système d'usinage 8 et chaque deuxième système d'usinage 10 comprennent des parties métalliques traversées par des canaux dans lesquels circulent un liquide dont la température est régulée à une valeur prédéterminée, cette régulation étant effectuée par un troisième ensemble fonctionnel de manière à assurer un maintien de la machine-outil à une température prédéterminée.

Ce troisième ensemble fonctionnel n'a pas été représenté.

De manière remarquable, dans au moins un premier système d'usinage 8 qui,
- comprend un premier bloc porte-outil 81 portant la pluralité de premiers outils d'usinage 82 avec les axes longitudinaux 83 des outils d'usinage 81 et,
- met en oeuvre un deuxième unité de commande 9 comprenant un premier organe moteur 94 de déplacement du premier bloc porte-outil 81 dans la deuxième direction D2 et un deuxième organe moteur 95 de déplacement du premier bloc porte-outil 81 dans la troisième direction D3, lesquels premier organe moteur 94 et deuxième organe moteur 95 sont placés sous le contrôle d'un premier moyen fonctionnel de commande numérique 96 :
   - le premier organe moteur 94 entraîne en rotation une vis 940,
- disposée avec son axe longitudinal, dit cinquième axe longitudinal 941 orienté sensiblement parallèlement à la deuxième direction D2,
- montée dans un palier 942 de guidage en rotation autour du dit cinquième axe longitudinal 941, ce palier 942 étant solidaire du bâti 4 et possédant un plan de référence 943 dit premier plan de référence 943 dont la position est prédéfinie et qui est orthogonal audit cinquième axe longitudinal 941 de la vis 940 et,
- actionnée en rotation autour dudit cinquième axe longitudinal 941 par le premier organe moteur 94 commandé par le premier moyen fonctionnel de commande numérique 96,
- associé au premier bloc porte-outil 81 par un écrou 944 solidaire de ce premier bloc porte-outil 81, cet écrou 944 possédant un plan de référence 945, dit deuxième plan de référence 945 dont la position est prédéfinie qui est orthogonal au cinquième axe longitudinal 941 de la vis 940,
   ces éléments étant proportionnés et montés sur le bâti 4 et sur le premier bloc porte-outil 81 de manière telle que :
   - lorsqu'un outil 82 présente un point de contact 820 avec une pièce 2, notamment lors d'un usinage, une dimension, dite première dimension L1, mesurée orthogonalement au deuxième plan de référence 945 et entre ce deuxième plan de référence 945 et le point de contact 820 de l'outil 82 considéré avec la pièce (2), est sensiblement égale à une dimension L2, dite deuxième dimension L2, mesurée entre le premier plan de référence 943 et le deuxième plan de référence 945, et, par cela,
   - dans la deuxième direction D2, la dilatation thermique longitudinale de la vis 940, selon un premier sens, est compensée par la dilatation thermique du premier bloc porte-outil 81 selon un deuxième sens opposé.

## Revendications

1. Machine-outil (1) pour la réalisation de pièces (2) de haute précision, cette machine-outil (1) comprenant une structure constituée par un bâti (4) qui s'appuie sur un support, tel le sol, et portés par ce bâti (4) :
- au moins un premier ensemble fonctionnel qui, dit broche (6), est,
. équipé d'une partie active (61) qui, montée tournante autour d'un premier axe de rotation (62), assure une fonction de maintien et d'entraînement en rotation de la pièce (2) de manière à permettre l'usinage de cette pièce (2),
. guidé en translation dans une première direction (D1) parallèle audit premier axe de rotation (62),
. placé sous l'influence d'au moins une première unité de commande (7) vers des positions prédéterminées dans la première direction (D1),
- au moins un premier système d'usinage (8) constitué d'un premier bloc porte-outil (81),
. supportant une pluralité de premiers outils d'usinage (82) fixés et disposés en au moins une rangée, c'est-à-dire avec leur axes longitudinaux (83) parallèles entre eux et avec un écartement prédéterminé, et
. guidé dans au moins deux directions sécantes définissant un premier plan (P1) sensiblement orthogonal audit premier axe de rotation (62), dont une deuxième direction (D2) et une troisième direction (D3) qui sont déterminées pour autoriser l'usinage de la pièce (2), et
. placé sous l'influence d'au moins une deuxième unité de commande (9) vers des positions prédéterminées dans les dites deuxième et troisième directions (D2, D3),
la dite machine-outil étant **caractérisée en ce qu'**elle comprend un deuxième système d'usinage (10) constitué par au moins un bloc porte-outil qui, dit deuxième bloc porte-outil (101), est disposé d'un manière rayonnante au premier axe de rotation (62), et est :
- guidé selon une quatrième direction (D4) sécante au dit premier axe de rotation (62),
- porteur d'un outil d'usinage (100), dit deuxième outil d'usinage (100) orienté pour être actif selon la quatrième direction (D4),
- placé sous l'influence d'au moins une troisième unité de commande (11) vers des positions prédéterminées dans la quatrième direction (D4).

2. Machine-outil selon la revendication 1, **caractérisée en ce que** le deuxième système d'usinage (10) est constitué par une pluralité de deuxièmes blocs porte-outil (101) qui sont disposés de manière rayonnante au premier axe de rotation (62), et chacun de ces deuxièmes blocs porte-outil (101) est
- d'une part, guidé selon une quatrième direction (D4) sécante au dit premier axe de rotation (62) et,
- d'autre part, placé sous l'influence d'au moins une troisième unité de commande (11) vers des positions prédéterminées dans la quatrième direction (D4).

3. Machine-outil selon la revendication 2, **caractérisée en ce que** :
- la deuxième unité de commande (9) comprend un premier organe moteur (94) de déplacement du premier bloc porte-outil (81) dans la deuxième direction (D2) et un deuxième organe moteur (95) de déplacement dudit premier bloc porte-outil (81) dans la troisième direction (D3), lesquels premier organe moteur (94) et deuxième organe moteur (95) sont placés sous le contrôle d'un premier moyen fonctionnel de commande numérique (96),
- la troisième unité de commande (11) met en oeuvre une came (102) d'actionnement de chaque deuxième bloc porte-outil (101) et comprend un troisième organe moteur (103) est placé sous le contrôle d'un deuxième moyen fonctionnel de commande numérique (104).

4. Machine-outil selon l'une quelconque des revendications 1 à 3, **caractérisée en ce que** le premier ensemble fonctionnel, dit broche (6), est, guidé en translation dans une première direction (D1) parallèle audit premier axe de rotation (62), par un premier dispositif de guidage en translation (12) qui comprend :
- un premier élément de guidage en translation (121) et un deuxième élément de guidage en translation (122) qui sont situés de part et d'autre de la broche (6) et disposés de manière à définir un plan de guidage, dit deuxième plan (P2) de guidage, qui passe par le premier axe de rotation (62), ce deuxième plan (P2) de guidage étant incliné d'une première valeur angulaire (A) prédéterminée par rapport à un troisième plan (P3) horizontal,
- un troisième élément de guidage en translation (123) qui est disposé dans un plan de guidage, dit quatrième plan (P4) de guidage, qui passe par le premier axe de rotation (62) et est sécant audit deuxième plan (P2) de guidage.

5. Machine-outil selon l'une quelconque des revendications 1 à 3 dont la partie active (61) de la broche (6) est portée par un deuxième moyen fonctionnel de guidage en rotation d'un type permettant un guidage en rotation de la broche (6) autour du premier axe de rotation (62) qui est extrêmement précis, et ce, sur une très large gamme de vitesses de rotation, **caractérisée en ce que** le premier ensemble fonctionnel, dit broche (6), est, guidé en translation dans une première direction (D1) parallèle audit premier axe de rotation (62), par un premier dispositif de guidage en translation (12) qui comprend :
- un premier élément de guidage en translation (121) et un deuxième élément de guidage en translation (122) qui sont situés de part et d'autre de la broche (6) et disposés de manière à définir un plan de guidage, dit deuxième plan (P2) de guidage, qui passe par le premier axe de rotation (62), ce deuxième plan (P2) de guidage étant incliné d'une première valeur angulaire (A) prédéterminée par rapport à un troisième plan (P3) horizontal,
- un troisième élément de guidage en translation (123) qui est disposé dans un plan de guidage, dit quatrième plan (P4) de guidage, qui passe par le premier axe de rotation (62) et est sécant audit deuxième plan (P2) de guidage.

6. Machine-outil selon la revendication 4 ou 5, **caractérisée en ce que** le premier élément de guidage en translation (121), le deuxième élément de guidage en translation (122) et le troisième élément de guidage en translation (123) sont chacun constitués par une glissière de guidage en translation qui comprend des rouleaux à aiguilles (124).

7. Machine-outil selon la revendication 6, **caractérisée en ce que** les rouleaux à aiguilles (124) du premier élément de guidage en translation (121) et du deuxième élément de guidage en translation (122) ont chacun un axe longitudinal, dit troisième axe longitudinal, et ces rouleaux à aiguilles (124) sont disposés d'une manière telle que leurs axes longitudinaux, dits troisièmes axes longitudinaux sont situés dans un cinquième plan (P5) qui, au plus est confondu avec le deuxième plan (P2) et, au moins est parallèle avec ce deuxième plan (P2) et situé au voisinage de ce dernier.

8. Machine-outil selon l'une quelconque des revendications 4 à 7, **caractérisée en ce que** le deuxième plan (P2) et le quatrième plan (P4) sont perpendiculaires.

9. Machine-outil selon l'une quelconque des revendications 4 à 8, **caractérisée en ce que** le premier élément de guidage en translation (121), le deuxième élément de guidage en translation (122) et le troisième élément de guidage en translation (123) sont chacun élastiquement préchargés par un appareil de précharge (17) de manière telle que leur jeu de fonctionnement soit réduit.

10. Machine-outil selon l'une quelconque des revendications 1 à 9, **caractérisée en ce que** le guidage selon la quatrième direction (D4) résulte d'un guidage en translation.

11. Machine-outil selon l'une quelconque des revendications 1 à 10, **caractérisée en ce que** le guidage selon la quatrième direction (D4) résulte d'un guidage en oscillation d'un deuxième bloc porte-outil (101) autour d'un point de rotation prévu de manière à induire le déplacement dudit deuxième bloc porte-outil (101) dans la quatrième direction (D4) recherchée.

12. Machine-outil selon l'une quelconque des revendications 1 à 11, **caractérisée en ce qu'**elle comprend un deuxième ensemble fonctionnel (13) qui, dit contre broche (13), est,
. équipé d'une partie active (131) qui, montée tournante autour d'un deuxième axe de rotation (132), peut assurer une fonction de maintien et d'entraînement en rotation de la pièce (2) de manière à permettre l'usinage de cette pièce (2),
. guidé en translation dans une cinquième direction (D5) parallèle audit deuxième axe de rotation (132),
. placé sous l'influence au moins de la première unité de commande (7) vers des positions prédéterminées dans la cinquième direction (D5), notamment, de manière à autoriser une opération de reprise d'une pièce (2) située dans la broche (6).

13. Machine-outil selon la revendication 12, **caractérisée en ce que** le deuxième ensemble fonctionnel (13), dit contre broche (13), est guidé en translation dans la cinquième direction (D5) parallèle audit deuxième axe de rotation (132), par un deuxième dispositif de guidage en translation (14) qui comprend :
- un quatrième élément de guidage en translation (140) et un cinquième élément de guidage en translation (141) qui sont situés de part et d'autre de la contre broche (13) et disposés de manière à définir un plan de guidage, dit sixième plan (P6) de guidage, qui passe par le deuxième axe de rotation (132), ce sixième plan (P6) de guidage étant incliné d'une deuxième valeur angulaire (B) prédéterminée par rapport au troisième plan (P3) horizontal,
- un septième élément de guidage en translation (142) qui est disposé dans un plan de guidage, dit septième plan (P7) de guidage, qui passe par le deuxième axe de rotation (132) et est sécant audit sixième plan (P6) de guidage,
- la broche (6) et la contre broche (13) sont placées en vis à vis et le deuxième plan (P2) et le sixième plan (P6) sont coplanaires, de même que le quatrième plan (P4) et le septième plan (P7) sont également coplanaires.

14. Machine-outil selon la revendication 13, **caractérisée en ce que** le quatrième élément de guidage en translation (140), le cinquième élément de guidage en translation (141) et le septième élément de guidage en translation (142) sont chacun constitués par une glissière de guidage en translation qui comprend des rouleaux à aiguilles (143).

15. Machine-outil selon la revendication 14, **caractérisée en ce que** les rouleaux à aiguilles (143) du quatrième élément de guidage en translation (140) et du cinquième élément de guidage en translation (141) ont chacun un axe longitudinal, dit quatrième axe longitudinal, et ces rouleaux à aiguilles (143) sont disposés d'une manière telle que leurs axes longitudinaux, dits quatrièmes axes longitudinaux, sont situés dans un huitième plan (P8) qui, au plus est confondu avec le sixième plan (P6) et, au moins est parallèle avec ce sixième plan (P6) et situé au voisinage de ce dernier.

16. Machine-outil selon l'une des revendications 13 à 15, **caractérisée en ce que** le sixième plan (P6) et le septième plan (P7) sont perpendiculaires.

17. Machine-outil selon l'une des revendications 14 à 16, **caractérisée en ce que** le quatrième élément de guidage en translation (140), le cinquième élément de guidage en translation (141) et le sixième élément de guidage en translation (142) sont chacun élastiquement préchargés par un appareil de précharge (17) de manière telle que leur jeu de fonctionnement soit réduit.

18. Machine-outil selon l'une des revendications 12 à 17, **caractérisée en ce qu'**elle comprend deux groupes de systèmes d'usinage chacun constitué par un premier système d'usinage (8) et un deuxième système d'usinage (10) et, l'un des groupes est disposé pour réaliser des usinages sur une pièce (2) portée par la broche (6) porte pièce tandis que l'autre est disposé pour réaliser des usinages sur une pièce (2) portée par la contre broche (13).

19. Machine-outil selon l'une quelconque des revendications 1 à 18, **caractérisée en ce que**, tant son bâti (4) que chaque premier système d'usinage (8) et chaque deuxième système d'usinage (10) comprennent des parties métalliques traversées par des canaux dans lesquels circulent un liquide dont la température est régulée à une valeur prédéterminée, cette régulation étant effectuée par un troisième ensemble fonctionnel de manière à assurer un maintien de la machine-outil à une température prédéterminée.

20. Machine-outil selon l'une quelconque des revendications 1 à 19 **caractérisé en ce que**, dans au moins un premier système d'usinage (8) qui,
. comprend un premier bloc porte-outil (81) portant la pluralité de premiers outils d'usinage (82) avec les axes longitudinaux (83) des outils d'usinage (81) et,
. met en oeuvre un deuxième unité de commande (9) comprenant un premier organe moteur (94) de déplacement du premier bloc porte-outil (81) dans la deuxième direction (D2) et un deuxième organe moteur (95) de déplacement du premier bloc porte-outil (81) dans la troisième direction (D3), lesquels premier organe moteur (94) et deuxième organe moteur (95) sont placés sous le contrôle d'un premier moyen fonctionnel de commande numérique (96) :
- le premier organe moteur (94) entraîne en rotation une vis (940),
. disposée avec son axe longitudinal, dit cinquième axe longitudinal (941) orienté sensiblement parallèlement à la deuxième direction (D2),
. monté dans un palier (942) de guidage en rotation autour du dit cinquième axe longitudinal (941), ce palier (942) étant solidaire du bâti (4) et possédant un plan de référence (943) dit premier plan de référence (943) dont la position est prédéfinie et qui est orthogonal audit cinquième axe longitudinal (941) de la vis (940) et,
. actionnée en rotation autour dudit cinquième axe longitudinal (941) par le premier organe moteur (94) commandé par le premier moyen fonctionnel de commande numérique (96),
. associé au premier bloc porte-outil (81) par un écrou (944) solidaire de ce premier bloc porte-outil (81), cet écrou (944) possédant un plan de référence (945), dit deuxième plan de référence (945) dont la position est prédéfinie qui est orthogonal au cinquième axe longitudinal (941) de la vis (940),
ces éléments étant proportionnés et montés sur le bâti (4) et sur le premier bloc porte-outil (81) de manière telle que :
- lorsqu'un outil (82) présente un point de contact (820) avec une pièce (2), notamment lors d'un usinage, une dimension, dite première dimension (L1), mesurée orthogonalement au deuxième plan de référence (945) et entre ce deuxième plan de référence (945) et le point de contact (820) de l'outil (82) considéré avec la pièce (2), est sensiblement égale à une dimension (L2), dite deuxième dimension (L2), mesurée entre le premier plan de référence (943) et le deuxième plan de référence (945), et, par cela
- dans la deuxième direction (D2), la dilatation thermique longitudinale de la vis (940), selon un premier sens, est compensée par la dilatation thermique du premier bloc porte-outil (81) selon un deuxième sens opposé.
